# EUROPÄISCHE PATENTSCHRIFT

(11) **EP 1 526 146 B1**
(45) Veröffentlichungstag und Bekanntmachung des Hinweises auf die Patenterteilung: **09.08.2006**
(21) Anmeldenummer: 04104070.0
(22) Anmeldetag: 25.08.2004
(51) Int. Cl.: C08G 18/48, C08G 18/28, C08G 18/80, C08G 18/18, C08G 18/22

(54) **Hochreaktive Polyurethan-Pulverlackzusammensetzungen auf Basis epoxidgruppenterminierter, uretdiongruppenhaltiger Polyadditionsverbindungen**
Highly reactive powder coating materials based on epoxy terminated, urethdione group containing polyaddition compounds
Peintures en poudre fortement réactives à base de composés de polyaddtion terminés par des fonctions époxydes contenant des groupes urétdiones

(30) Priorität: 22.10.2003 DE 10348966
(43) Veröffentlichungstag der Anmeldung: 27.04.2005
(73) Patentinhaber: Degussa AG, 40474 Düsseldorf (DE)
(72) Erfinder: Wenning, Andreas, Dr., 48301 Nottuln (DE); Spyrou, Emmanouil, Dr., 46282 Dorsten (DE)

(56) Entgegenhaltungen:
- EP-A- 1 063 269
- DE-A1- 10 205 608

## Beschreibung

Die Erfindung betrifft Polyurethan-Pulverlackzusammensetzungen auf Basis von epoxidgruppenterminierten, uretdiongruppenhaltigen Polyadditionsverbindungen, die bei niedrigen Einbrenntemperaturen aushärten, ein Verfahren zur Herstellung derartiger Zusammensetzungen sowie deren Verwendung zur Herstellung von Kunststoffen, insbesondere Polyurethan-Pulverlackbeschichtungen, die bei niedrigen Einbrenntemperaturen zu hochglänzenden oder matten, licht- und wetterstabilen Lackfilmen vernetzen.

Bei Raumtemperatur feste, externe oder intern blockierte Polyisocyanate stellen wertvolle Vernetzer für thermisch vernetzbare Polyurethan (PUR)-Pulverlackzusammensetzungen dar.

So beschreibt z. B. die DE 27 35 497 PUR-Pulverlacke mit hervorragender Witterungs- und Wärmestabilität. Die Vernetzer, deren Herstellung in der DE 27 12 931 beschrieben wird, bestehen aus ε-Caprolactam blockierten Isocyanuratgruppen enthaltendem Isophorondiisocyanat. Es sind auch urethan-, biuret- oder harnstoffgruppenhaltige Polyisocyanate bekannt, deren Isocyanatgruppen ebenfalls blockiert sind.

Der Nachteil dieser extern blockierten Systeme besteht in der Abspaltung des Blockierungsmittels während der thermischen Vernetzungsreaktion. Da das Blockierungsmittel somit in die Umwelt emittieren kann, müssen aus ökologischen und arbeitshygienischen Gründen besondere Vorkehrungen zur Reinigung der Abluft und/oder Wiedergewinnung des Blockierungsmittels getroffen werden. Zudem weisen die Vernetzer eine geringe Reaktivität auf. Es sind Härtungstemperaturen oberhalb von 170 °C erforderlich.

Die DE 30 30 539 und DE30 30 572 beschreiben Verfahren zur Herstellung von uretdiongruppenhaltigen Polyadditionsverbindungen, deren terminale Isocyanatgruppen mit Monoalkoholen oder Monoaminen irreversibel blockiert sind. Nachteilig sind insbesondere die Ketten abbrechenden Bestandteile der Vernetzer, die zu geringen Netzwerkdichten der PUR-Pulverlackbeschichtungen und damit zu mäßigen Lösemittelbeständigkeiten führen.

Uretdion Pulverlackvernetzer, die durch Umsetzung von uretdiongruppenhaltigen Polyisocyanaten mit Diolen und Ester- und/oder carbonatgruppenhaltigen Kettenverlängerungsmitteln bzw. unter Verwendung von Dimerdiolen hergestellt werden, sind in der EP 0 639 598 und in der EP 0 720 994 beschrieben.

Hydroxylgruppenterminierte, uretdiongruppenhaltige Polyadditionsverbindungen sind Gegenstand der EP 0 669 353. Sie weisen aufgrund ihrer Funktionalität von zwei eine verbesserte Resistenz gegenüber Lösemitteln auf.

PUR-Pulverbeschichtungen auf Basis epoxidterminierten, uretdiongruppenhaltigen Polyadditionsverbindungen, die in der EP 1 063 269 beschrieben werden, besitzen eine noch wesentlich höhere Chemikalienresistenz.

Den Pulverlackzusammensetzungen auf Basis all dieser uretdiongruppenhaltigen Polyisocyanate ist gemeinsam, dass sie bei der Härtungsreaktion keine flüchtigen Verbindungen emittieren. Allerdings liegen die Einbrenntemperaturen mit mindestens 180 °C auf hohem Niveau.

Der Einsatz von Amidinen als Katalysatoren in PUR-Pulverlackzusammensetzungen wird in der EP 0 803 524 beschrieben. Diese Katalysatoren führen zwar zu einer Erniedrigung der Aushärtungstemperatur, zeigen aber eine beträchtliche Vergilbung, die im Beschichtungsbereich allgemein unerwünscht ist. Ursache dieser Vergilbung sind vermutlich die reaktiven Stickstoffatome in den Amidinen. Diese können sich mit Luftsauerstoff zu N-Oxiden umsetzen, die für die Verfärbung verantwortlich sind.

In der EP 0 803 524 werden auch andere Katalysatoren erwähnt, die bislang für diesen Zweck verwendet wurden, ohne aber eine besondere Wirkung auf die Aushärtetemperatur zu zeigen. Dazu gehören die aus der Polyurethan-Chemie bekannten metallorganischen Katalysatoren, wie z. B. Dibutylzinndilaurat (DBTL), oder aber tertiäre Amine, wie z. B. 1,4-Diazabicylco[2.2.2]octan (DABC).

In der WO 00/34355 werden Katalysatoren auf der Basis von Metallacetylacetonaten, z. B. Zinkacetylacetonat, beansprucht. Solche Katalysatoren sind tatsächlich in der Lage, die Aushärtungstemperatur von uretdiongruppenhaltigen Polyurethan-Pulverlackzusammensetzungen zu erniedrigen, zeigen als Reaktionsprodukte aber hauptsächlich Allophanate (M. Gedan-Smolka, F. Lehmann, D. Lehmann "New catalysts for the low temperature curing of uretdione powder coatings" International Waterborne, High solids and Powder Coatings Symposium, New Orleans, 21. - 23.02.2001). Allophanate sind die Umsetzungsprodukte aus einem Mol Alkohol und zwei Mol Isocyanat, während sich in der herkömmlichen Urethanchemie ein Mol Alkohol mit einem Mol Isocyanat umsetzt. Durch die unerwünschte Allophanatbildung werden also technisch wie ökonomisch wertvolle Isocyanatgruppen vernichtet.

In den DE 103 20 267, DE 102 05 608 und DE 103 20 266 werden Metallhydroxide, Metallalkohololate, quartäre Ammoniumsalze mit Hydroxiden, Fluoriden oder Carboxylaten beschrieben, die die Rückspaltung von Uretdiongruppen so stark beschleunigen, so dass sich bei Verwendung uretdiongruppenhaltiger Pulverlackhärter die Aushärtetemperatur von Pulverlackzusammensetzungen beträchtlich erniedrigen lässt.

Da die Aktivität dieser Katalysatoren in Anwesenheit von Säuren deutlich abnimmt, beinhalten die aus derartigen hoch beschleunigten Pulverlackzusammensetzungen hergestellten Beschichtungen einen Säurefänger. Säuregruppen sind in den eingesetzten Polyesterpolyolen üblicherweise in signifikanten Mengen anwesend. Als Säurefänger können z. B. sehr teure 2-Oxazoline verwendet werden. Vorteilhaft werden jedoch Epoxidverbindungen eingesetzt. Flüssige Epoxidverbindungen, wie etwa Diglycidylether aus Basis Bisphenol A, haben den Nachteil, dass sie nur in Form als Kosten intensives festes Masterbatch eingesetzt werden können. Daher werden feste Epoxidverbindungen, wie etwa Triglycidylisocyanurat (TGIC), besonders bevorzugt. Allerdings sind die mit TGIC formulierten Pulverlackzusammensetzungen aufgrund des toxischen Potentials von TGIC kennzeichnungspflichtig.

Aufgabe der vorliegenden Erfindung war es daher, ungefährliche, hochreaktive, uretdiongruppenhaltige Polyurethan-Pulverlackzusammensetzungen zu finden, die sich bei sehr niedrigen Temperaturen aushärten lassen und sich insbesondere zur Herstellung von Kunststoffen sowie hochglänzenden oder matten, licht- und wetterstabilen Pulverbeschichtungen eignen.

Überraschend wurde gefunden, dass epoxidgruppenterminierte, uretdiongruppenhaltige Polyaddtionsverbindungen als Vernetzerkomponente für bei sehr niedrigen Einbrenntemperaturen aushärtbaren Polyurethan-Pulverlacken einsetzbar sind. Besonders überraschend ist dabei die Tatsache, dass die Epoxidgruppen mit den Carbonsäuregruppen in den Pulverlackzusammensetzungen im Temperaturbereich von 120 bis 170 °C reagieren. Üblicherweise liegt die Vernetzungstemperatur TGIC-haltiger Pulverlacke oberhalb 180 °C.

Gegenstand der vorliegenden Erfindung sind demnach Polyurethan-Pulverlackzusammensetzungen, im Wesentlichen enthaltend
A) mindestens eine epoxidgruppenterminierte, uretdiongruppenhaltige Polyadditionsverbindung mit einem Schmelzpunkt von 40 bis 130 °C, einer zahlenmittleren Molmasse zwischen 1 000 und 15 000 und einem Gehalt an freien Isocyanatgruppen (berechnet als NCO, Molekulargewicht = 42) von 0 bis 2 Gew.-%;
B) mindestens ein hydroxylgruppenhaltiges Polymer mit einem Schmelzpunkt von 40 bis 130 °C und einer OH-Zahl von 20 bis 200 mg KOH/g;
C) mindestens einen Katalysator aus der Gruppe der Metallacetylacetonate, Metallhydroxide, Metallalkoholate, quartären Ammoniumhydroxide, quartären Ammoniumfluoride oder quartären Ammoniumcarboxylate;
D) gegebenenfalls Hilfs- und Zusatzstoffe,
wobei die beiden Komponenten A) und B) in dem Verhältnis vorliegen, dass auf jede Hydroxylgruppe der Komponente B) 0,3 bis 1 Uretdiongruppe der Komponente A) entfällt und der Anteil des Katalysators unter C) 0,001 bis 3 Gew.-% an der Gesamtmenge der Komponenten A) und B) beträgt.

Weiterer Gegenstand der Erfindung ist auch ein Verfahren zur Herstellung der Pulverlackzusammensetzungen.

Gegenstand der Erfindung ist auch die Verwendung der erfindungsgemäßen Pulverlackzusammensetzungen zur Herstellung von Pulverlackbeschichtungen auf Metall-, Kunststoff-, Glas-, Holz- oder Ledersubstraten oder sonstigen hitzeresistenten Untergründen.

Ebenfalls Gegenstand der Erfindung sind Metallbeschichtungszusammensetzungen, insbesondere für Automobilkarossen, Motor- und Fahrräder, Gebäudeteile und Haushaltgeräte, Holz-, Kunststoff-, Leder- oder Glasbeschichtungszusammensetzungen, im Wesentlichen enthaltend eine Polyurethan-Pulverlackzusammensetzungen aus
A) mindestens einer epoxidgruppenterminierten, uretdiongruppenhaltigen Polyadditionsverbindung mit einem Schmelzpunkt von 40 bis 130 °C, einer zahlenmittleren Molmasse zwischen 1 000 und 15 000 und einem Gehalt an freien Isocyanatgruppen (berechnet als NCO, Molekulargewicht = 42) von 0 bis 2 Gew.-%;
B) mindestens einem hydroxylgruppenhaltigen Polymer mit einem Schmelzpunkt von 40 bis 130 °C und einer OH-Zahl von 20 bis 200 mg KOH/g;
C) mindestens einem Katalysator aus der Gruppe der Metallacetylacetonate, Metallhydroxide, Metallalkoholate, quartären Ammoniumhydroxide, quartären Ammoniumfluoride oder quartären Ammoniumcarboxylate;
D) gegebenenfalls Hilfs- und Zusatzstoffen;
   wobei die beiden Komponenten A) und B) in dem Verhältnis vorliegen, dass auf jede Hydroxylgruppe der Komponente B) 0,3 bis 1 Uretdiongruppe der Komponente A) entfällt und der Anteil des Katalysators unter C) 0,001 bis 3 Gew.-% an der Gesamtmenge der Komponenten A) und B) beträgt.

Die epoxidterminierten, uretdiongruppenhaltigen Polyadditionsverbindungen A) sind erhältlich durch Umsetzung von
a) 40 bis 84,5 Gew.-% mindestens einer Polyisocyanatkomponente, die aufgebaut ist aus
   1. mindestens 40 Gew.-% einer Uretdiongruppen aufweisenden Polyisocyanatverbindung mit einer mittleren Funktionalität von mindestens 2,0 und
   2. höchstens 60 Gew.-% mindestens einer Diisocyanatverbindung und/oder Isocyanuratverbindung ohne Uretdiongruppen;
b) 50 bis 15 Gew.-% mindestens einer Verbindung mit mindestens zwei Hydroxylgruppen;
c) 10 bis 0,5 Gew.-% mindestens einer Verbindung mit mindestens einer Epoxidgruppe und mindestens einer anderen gegenüber Isocyanatgruppen reaktiven funktionelle Gruppe.

Die eingesetzten Uretdiongruppen aufweisenden Polyisocyanatverbindungen a1) werden aus beliebigen Diisocyanaten durch katalytische Dimerisierung der Isocyanatgruppen erhalten. Bei den beliebigen Diiisocyanaten zur Herstellung von a1) handelt es sich um aliphatische, cycloaliphatische, araliphatische und/oder aromatische Diisocyanate. Bevorzugte Beispiele sind 1,6-Diisocyanatohexan (HDI), 2-Methylpentamethylendiisocyanat-1,5 (DI 51), 2,2,4 (2,4,4)-Trimethylhexamethylendiisocyanat, 4,4'-Diisocyanatodicyclohexyl-methan, 1,3- und 1,4-Diisocyanatocyclohexan, Isophorondiisocyanat (IPDI), Diphenylmethan-2,4' und/oder -4,4'-diisocyanat, Xylylendiisocyanat oder 2,4- und 2,6-Toluylendiisocyanat sowie beliebige Gemische dieser Isomeren, wobei diese Diisocyanate allein oder in Mischungen zur Herstellung der Komponente a1) eingesetzt werden können. Auch die Uretdiongruppen aufweisenden Polyisocyanatverbindungen a1) sind beliebig untereinander mischbar und im Sinne der Erfindung für die Komponente a1) einsetzbar.

Als Katalysatoren zur Herstellung der Komponente a1) aus den genannten Diisocyanaten sind grundsätzlich alle bekannten, die Dimerisierung von Isocyanatgruppen katalysierenden Verbindungen geeignet. Beispiele sind tertiäre organische Phosphine (US 4614 785, DE19 34 763 und DE39 00 053), Tris-(dialkylamino)-phosphine (DE 30 30 513, DE 32 27 779 und DE 34 37 635), substituierte Pyridine (DE 10 81 895 und DE 37 39 549) und substituierte Imidazole oder Benzimidazole (EP 0 417 603).

Bevorzugte Polyisocyanatverbindungen a1) sind Uretdiongruppen aufweisende Polyisocyanate, die aus Diisocyanaten mit aliphatisch und/oder cycloaliphatisch gebundenen Isocyanatgruppen hergestellt sind.

Besonders bevorzugt werden die Uretdione des Isophorondiisocyanats (IPDI) und des 1,6-Diisocyanatohexan (HDI) verwendet.

Das isocyanuratfreie Uretdion des Isophorondiisocyanats ist bei Raumtemperatur hochviskos und größer als 10³ mPa s, bei 60 °C liegt die Viskosität bei 13·10³ mPa s und bei 80 °C bei 1,410³ mPa s. Der freie NCO-Gehalt liegt zwischen 16,8 und 18,5 Gew.-%, d. h. dass mehr oder minder hohe Anteile an Polyuretdion des IPDI im Reaktionsprodukt vorliegen müssen. Der Monomergehalt liegt bei 1 Gew.-%. Der Gesamt-NCO-Gehalt des Reaktionsprodukts nach dem Erhitzen auf 180 bis 200 °C beträgt 37,5 bis 37,8 Gew.-%.

Während der Dimerisierung von aliphatischen Diisocyanaten bei an sich bekannten Verfahren und Katalysatoren bildet sich als Nebenprodukt Isocyanurat in unterschiedlichen Mengen, so dass die NCO-Funktionalität der eingesetzten Polyisocyanatverbindungen a1) mindestens 2 beträgt.

Bei den Diisocyanaten a2) handelt es sich um die oben angegebenen, zur Herstellung der Komponente a1) geeigneten Diisocyanate. Sie können bis zu 60 Gew.-%, bezogen auf das Gesamtgewicht der Komponenten a1) und a2) ausmachen Geeignete Gemische sind z. B. auch Lösungen von Uretdioren in Diisocyanaten, wie sie nach katalytischer Dimerisierung und ohne Abtrennung des nicht umgesetzten Diisocyanats erhalten werden.

Bei den Isocyanuraten a2) handelt es sich um die Trimeren der Diisocyanate, die auch zur Herstellung der Uretdiongruppen aufweisenden Polyisocyanatverbindungen a1) verwendet werden. Die Isocyanurate können separat der Polyisocyanatverbindung a1) zugegeben werden, oder sie sind bereits Bestandteil der Polyisocyanatverbindung a1), da sie teilweise bei der Dimerisierung von Diisocyanaten als Nebenprodukt gebildet werden.

Als Verbindungen b) eignen sich alle in der PUR-Chemie üblicherweise eingesetzten Diole des Molekulargewichts von mindestens 62. Beispielhaft genannt seien Ethylenglykol, Triethylenglykol, Butandiol-1,4, Pentandiol-1,5, Hexandiol-1,6, 3-Methylpentandiol-1,5, Neopentylglykol, 2,2,4 (2,4,4)-Trimethylhexandiol sowie Hydroxypivalinsäureneopentylglykolester. Sie werden allein oder in Mischungen verwendet.

Als Verbindungen b) eignen sich auch Diole, die weitere funktionelle Gruppen enthalten. Hierbei handelt es sich um die an sich bekannten linearen hydroxylgruppenhaltigen Polyester, Polycarbonate, Polycaprolactone, Polyether, Polythioether, Polyesteramide, Polyurethane oder Polyacetale. Sie weisen vorzugsweise ein zahlenmittleres Molekulargewicht von 134 bis 3 500 auf. Bevorzugt sind lineare hydroxylgruppenhaltige Polyester - Polyesterpolyole - oder Gemische solcher Polyester. Sie werden z. B. durch Umsetzung von Diolen mit unterschüssigen Mengen an Dicarbonsäuren, entsprechenden Dicarbonsäureanhydriden, entsprechenden Dicarbonsäureestern von niederen Alkoholen, Lactonen oder Hydroxycarbonsäuren hergestellt.

Zur Herstellung der Polyesterpolyole geeignete Diole sind neben den oben genannten Diolen auch 2-Methylpropandiol, 2,2-Dimethylpropandiol, Diethylenglykol, Dodecandiol-1,12, 1,4-Cyclohexandimethanol und 1,2- und 1,4-Cyclohexandiol.

Zur Herstellung der Polyesterpolyole geeignete Dicarbonsäuren oder Derivate können aliphatischer, cycloaliphatischer, aromatischer und/oder heteroaromatischer Natur sein und gegebenenfalls, z. B. durch Halogenatome, substituiert und/oder ungesättigt sein.

Zu den bevorzugten Dicarbonsäuren oder Derivaten zählen Bernstein-, Adipin-, Kork-, Azelain- und Sebacinsäure, 2,2,4 (2,4,4)-Trimethyladipinsäure, Phthalsäure, Phthalsäureanhydrid, Isophthalsäure, Terephthalsäure, Terephthalsäuredimethylester, Tetrahydrophthalsäure, Maleinsäure, Maleinsäureanhydrid und dimere Fettsäuren.

Geeignete Polyesterpolyole sind auch solche, die sich in bekannter Weise durch Ringöffnung aus Lactonen, wie ∈-Caprolacton, und einfachen Diolen als Startermoleküle herstellen lassen.

Die zur Herstellung der Polyesterpolyole verwendeten Diole und Dicarbonsäuren bzw. deren Derivate können in beliebigen Mischungen eingesetzt werden.

Verbindungen c) sind solche, die neben einer Epoxidgruppe noch mindestens eine weitere funktionelle Gruppe tragen, wie z. B. Carboxyl-, Hydroxyl-, Mercapto- oder Aminogruppen, die zur Reaktion mit einer Isocyanatgruppe befähigt ist. Besonders bevorzugt sind 2,3-Epoxy-1-propanol und epoxidiertes Sojaöl.

Die epoxidgruppenterminierten, uretdiongruppenhaltigen Polyadditionsverbindungen A) liegen unterhalb von 40 °C in fester und oberhalb von 130 °C in flüssiger Form vor und weisen zahlenmittlere Molmassen zwischen 1 000 und 15 000 auf. Sie sind in der EP 1 063 269 beschrieben. Neben den dort und oben beispielhaft erwähnten Diolen können auch z. B. Dodecandiol-1,12 oder Dimerdiole eingesetzt werden. Der Einsatz von Polyolen ist ebenfalls möglich. So können beispielsweise Trimethylolpropan, Ditrimethylolpropan, Trimethylolethan, Hexantriol-1,2,6, Butandtriol-1,2,4, Tris(β-Hydroxyethyl)-isocyanurat, Pentaerythrit, Mannit oder Sorbit verwendet werden. Als Di- oder Polyole mit weiteren funktionellen Gruppen lassen sich die an sich bekannten hydroxylgruppenhaltigen Polyester, Polycaprolactone, Polycarbonate, Polyether, Polythioether, Polyesteramide, Polyurethane, Polycaprolactame oder Polyacetale einsetzten. Besonders vorteilhaft ist die Verwendung von Polyestern und Polycaprolactonen.

Bei den hydroxylgruppenhaltigen Polymeren B) werden bevorzugt Polyester, Polyether, Polyacrylate, Polyurethane und/oder Polycarbonate mit einer OH-Zahl von 20 bis 200 (in mg KOH/Gramm) eingesetzt. Besonders bevorzugt werden Polyester mit einer OH-Zahl von 30 bis 150, einem zahlenmittlern Molekulargewicht von 500 bis 6 000 g/mol und einem Schmelzpunkt zwischen 40 und 130 °C verwendet. Solche Bindemittel sind beispielsweise in EP 0 669 354 und EP 0 254 152 beschrieben worden. Selbstverständlich können auch Mischungen solcher Polymere eingesetzt werden. Die Menge an den hydroxylgruppenhaltigen Polymeren wird so gewählt, dass auf jede Hydroxylgruppe des Polymeren 0,3 bis 1 Uretdiongruppe der erfindungsgemäßen uretdiongruppenhaltigen Polyadditionsverbindung entfällt.

Einsetzbare Katalysatoren C) zur Beschleunigung der Vernetzungsreaktion der erfindungsgemäßen uretdiongruppenhaltigen Polyadditionsverbindung mit dem hydroxylgruppenhaltigen Polymeren sind Metallacetylacetonate, Metallhydroxide, Metallalkoholate oder quatäre Ammoniumsalze mit Hydroxiden, Fluoriden oder Carboxylaten. Sie werden z. B. in WO 00/34355, DE 103 20 267, DE 102 05 608 und DE 103 20 266 beschrieben. Beispiele sind Zinkacetylacetonat, Lithiumisopropylpalkoholat, Tetraalkylammoniumhydroxid, Tetraalylammoniumfluorid oder Tetraalkylammoniumbenzoat.

Der Anteil des Katalysators an der Gesamtmenge der erfindungsgemäßen Polyurethan-Pulverzusammensetzungen beträgt 0,001 bis 3 Gew.-%.

Die Aktivität dieser Katalysatoren nimmt in Anwesenheit von Säuren deutlich ab. Zu den herkömmlichen Reaktionspartnern uretdiongruppenhaltiger Polyadditionsverbindungen gehören hydroxylgruppenhaltige Polyester. Aufgrund der Herstellungsweise dieser Polyester tragen sie üblicherweise in signifikantem Umfang noch Säuregruppen. Der Gehalt der Polyester an Säuregruppen sollte unter 20 mg KOH/g betragen, da sonst die Katalysatoren zu sehr inhibiert werden. In Gegenwart von solchen Säuregruppen tragenden Polyestern ist es vorteilhaft, die uretdiongruppenhaltigen Polyadditionsverbindungen zu verwenden, deren terminale Epoxidgruppen in der Lage sind, die Säuregruppen abzufangen. Dadurch wird der Einsatz teurer Katalysatoren im Überschuss, bezogen auf die Säuregruppen, genauso vermieden wie die Verwendung Kosten intensiver und/oder toxischer Säurefänger. Die vernetzende Wirkung der Epoxidgruppen in den uretdiongruppenhaltigen Polyadditionsverbindungen ist aufgrund der viskositätserhöhenden Wirkung zwar unerwünscht, stört aber in der Regel wegen der geringen Konzentration nicht. Im Gegenteil, es kann sogar eine Verbesserung der Resistenz der Beschichtungen gegenüber Chemikalien oder Außenbewitterungsbeständigkeit erwartet werden.

Für die Pulverlackherstellung können die in der Pulverlacktechnologie üblichen Hilfs- und Zusatzstoffe wie Verlaufmittel, z. B. Polysilicone oder Acrylate, Lichtschutzmittel, z. B. sterisch gehinderte Amine, oder andere Hilfsmittel, wie sie z. B. in EP0 669 353 beschrieben werden, in einer Gesamtmenge von 0,05 bis 5 Gew.-% zugesetzt werden. Füllstoffe und Pigmente, wie z. B. Titandioxid, können in einer Menge bis zu 50 Gew.-% der Gesamtzusammensetzung zugesetzt werden.

Optional können zusätzliche Katalysatoren, wie sie in der Polyurethanchemie bereits bekannt sind, enthalten sein. Es handelt sich hierbei hauptsächlich um metallorganische Katalysatoren, wie z. B. Dibutylzinndilaurat (DBTL), oder aber tertiäre Amine, wie z. B. 1,4-Diazabicyclo[2,2,2]octan, in Mengen von 0,001 bis 1 Gew.-%.

Die Homogenisierung aller Bestandteile zur Herstellung einer Pulverlackzusammensetzung kann in geeigneten Aggregaten, wie z. B. beheizbaren Knetern, vorzugsweise jedoch durch Extrudieren, erfolgen, wobei Temperaturobergrenzen von 120 bis 130 °C nicht überschritten werden sollten. Die extrudierte Masse wird nach Abkühlen auf Raumtemperatur und nach geeigneter Zerkleinerung zum sprühfertigen Pulver vermahlen. Das Auftragen des sprühfertigen Pulvers auf geeignete Substrate kann nach den bekannten Verfahren, wie z. B. durch elektrostatisches Pulversprühen, Wirbelsintern oder elektrostatisches Wirbelsintern erfolgen. Nach dem Pulverauftrag werden die beschichteten Werkstücke zur Aushärtung 4 bis 60 Minuten auf eine Temperatur von 120 bis 220 °C, vorzugsweise 6 bis 30 Minuten bei 120 bis 180 °C, erhitzt.

Die erfindungsgemäßen Niedrigtemperatur härtenden Pulverlackzusammensetzungen werden in der Regel bei Temperaturen von 120 bis 160 °C ausgehärtet. Durch ihre Verwendung können nicht nur Energie und (Aushärtungs-)Zeit gespart werden, sondern es lassen sich auch viele temperatursensible Substrate beschichten, die bei Temperaturen von 180 °C oder höher unerwünschte Vergilbungs-, Zersetzungs- und/oder Versprödungserscheinungen zeigen würden. Neben Metall, Glas, Holz, Leder, Kunststoffen und MDF-Platten sind auch bestimmte Aluminiumuntergründe prädestiniert. Bei letzteren führt eine zu hohe Temperaturbelastung mitunter zu einer unerwünschten Änderung der Kristallstruktur. Niedrigtemperatur härtende Pulverlackzusammensetzungen des Standes der Technik haben jedoch das Problem, dass sie teure und/oder toxische Säurefänger einsetzen müssen, um die Katalysator deaktivierenden Säuregruppen im hydroxylgruppenhaltigen Polymer zu binden. Darauf kann in den erfindungsgemäßen, bei sehr niedrigen Temperaturen aushärtbaren Polyurethan-Pulverlackzusammensetzungen verzichtet werden. Die daraus hergestellten Pulverbeschichtungen sind hochglänzend oder matt, licht- und wetterstabil und zeigen einen guten Verlauf.

Nachfolgend wird der Gegenstand der Erfindung anhand von Beispielen näher erläutert.

### Beispiele

### I. Herstellung der epoxidgruppenterminierten, uretdiongruppenhaltigen Polyadditionsverbindung

### Allgemeine Herstellvorschrift

Das Di- oder Polyol, die Epoxidkomponente und der Katalysator (Dibutylzinndilaurat) werden in einem Reaktor vorgelegt und in einem Lösemittel gelöst. Unter starkem Rühren und Inertgasatmosphäre wird die berechnete Menge des Isophorondiisocyanat-Uretdions, gelöst in einem Lösemittel, so schnell zugesetzt, dass die Reaktionstemperatur 100 °C nicht übersteigt. Die Umsetzung wird mittels titrimetrischer NCO-Bestimmung kontrolliert und ist nach 1 bis 3 Stunden beendet. Danach wird das Lösemittel entfernt, das Produkt abgekühlt und gegebenenfalls zerkleinert.

**Tabelle 1:**

| Glycidyl- und uretdiongruppenhaltige Polyadditionsverbindungen | | | | | | | | |
|---|---|---|---|---|---|---|---|---|
| Beispiel Nr. | Zusammensetzung | | | Chemische und physikalische Kenndaten | | | | |
| | IPDI- Uretdion | Di-/Polyol | Epoxid | NCO-frei | NCO- gesamt | EP- Gehalt | Schmelzbereich | Tg |
| | [mol] | [mol] | [mol] | [Gew.-%] | [Gew.-%] | [Gew.-%] | [°C] | [°C] |
| 1 | 4 | 3,0 DDDL | 2,0 Gy | 0,3 | 14,8 | 2,5 | 108- 111 | 69 |
| 2 | 6 | 4,0 Pripol 2033¹⁾ | 4,0 Gy | <0,1 | 10,7 | 3,4 | 65-68 | 38 |
| 2 | 7 | 4,5 Capa | 5,0 Gy | < 0,1 | 10,7 | 3,3 | 47-50 | 17 |
| | | 2054²⁾ | | | | | | |
| Vergleich | VESTAGON BF 1320³⁾ | | - | < 0,3 | 13,0- 14,5 | 0 | 90-115 | > 70 |

| | | | | | | | | |
|---|---|---|---|---|---|---|---|---|
| ¹⁾ Dimerdiol der Unichema ²⁾ Polycaprolacton der Solvay ³) Pulverlackhärter der Degussa AG | | | | | | | | |

Die Abkürzungen in der Tabelle 2 bedeuten:
DDDL: Dodecandiol-1,12
P: Pentandiol-1,5
Gy: 2,3-Epoxy-1-propanol
EP: Epoxid
Tg: Glasumwandlungstemperatur

### II. Polyurethan-Pulverlacke

### Allgemeine Herstellungsvorschrift

Die gemahlenen Produkte - uretdiongruppenhaltige Polyadditionsverbindung, Polyester, Katalysator, Verlaufmittel, Weißpigment - werden in einem Kollergang innig vermischt und anschließend im Extruder bei 80 bis 140 °C homogenisiert. Nach dem Erkalten wird das Extrudat gebrochen und mit einer Stiftsmühle auf eine Korngröße < 100 µm gemahlen. Das so hergestellte Pulver wird mit einer elektrostatischen Pulverspritzanlage bei 60 KV auf entfettete, gegebenenfalls vorbehandelte Eisenbleche appliziert und in einem Umlufttrockenschrank bei 160 °C 30 Minuten eingebrannt.

| **Einsatzstoffe** | **Produktbeschreibung, Hersteller** |
|---|---|
| Beispiele 1 bis 3 | epoxidterminierte, uretdiongruppenhaltige Polyadditinsverbindung |
| VESTAGON BF 1320 | Pulverlackvernetzer, Degussa AG, Coating & Colorants, |
| | Uretdion-Gehalt: 13,0 - 14, 5 % |
| ALFTALAT AN 739 | OH-Polyester, OH-Zahl: 55 - 60; SZ: 2-6; UCB |
| ARALDIT PT 810 | Triglycidyletherisocyanurat (TGIC), Vantico |
| KRONOS 2160 | Titandioxid, Kronos |
| RESIFLOW PV 88 | Verlaufmittel, Worlee-Chemie |
| TBAB | Tetrabutylammoniumbenzoat, Aldrich |

OH-Zahl: Verbrauch mg KOH/g Polymer; SZ: Säurezahl, Verbrauch mg KOH/g Polymer

Pulverlack-Zusammensetzungen (Angaben in Gew.-%):

| **Beispiele** | **Vernetzer** | **ALFTALAT AN 739** | **TBAB** | **PT 810** |
|---|---|---|---|---|
| 1 | 20,29 Beispiel 1 | 48,25 | 0,46 | - |
| 2 | 25,22 Beispiel 2 | 43,37 | 0,41 | - |
| 3 | 25,22 Beispiel 3 | 43,37 | 0,41 | - |
| V* | 20,13 VESTAGON BF 1320 | 46,92 | 0,45 | 1,5 |

| | | | | |
|---|---|---|---|---|
| * nicht erfindungsgemäßes Vergleichsbeispiel mit toxischem Araldit PT 810 | | | | |

Zusätzlich wurden in jeder der Formulierungen 30,0 Gew.-% KRONOS 2160 und 1,0 Gew.-% RESIFLOW PV 88 eingesetzt.

Ergebnisse der Aushärtung nach 30 Minuten bei 160 °C:

| **Beispiele** | **Erichsentiefung** | **Kugelschlag Direkt / indirekt** | **Verlauf** |
|---|---|---|---|
| | **[mm]** | **[inch • Ib]** | |
| 1 | > 10,0 | > 80 / 60 | 6 |
| 2 | 10,0 | 70 / 20 | 4 |
| 3 | > 10,0 | > 80 / 80 | 7 |
| V* | > 10,0 | > 80 / 70 | Struktur |

| | | | |
|---|---|---|---|
| * nicht erfindungsgemäßes Vergleichsbeispiel mit toxischem Araldit PT 810 | | | |

Erichsentiefung nach DIN 53 156

Kugelschlag nach ASTM D 2794-93

Verlauf nach PCI (1 bis 10, 1 sehr schlecht, 10 sehr gut)

## Patentansprüche

1. Polyurethan-Pulverlackzusammensetzung im Wesentlichen enthaltend
A) mindestens eine epoxidgruppenterminierte, uretdiongruppenhaltige Polyadditionsverbindung mit einem Schmelzpunkt von 40 bis 130 °C, einer zahlenmittleren Molmasse zwischen 1 000 und 15 000 und einem Gehalt an freien Isocyanatgruppen (berechnet als NCO, Molekulargewicht = 42) von 0 bis 2 Gew.-%;
B) mindestens ein hydroxylgruppenhaltiges Polymer mit einem Schmelzpunkt von 40 bis 130 °C und einer OH-Zahl von 20 bis 200 mg KOH/g;
C) mindestens einen Katalysator aus der Gruppe der Metallacetylacetonate, Metallhydroxide, Metallalkoholate, quartären Ammoniumhydroxide, quartären Ammoniumfluoride oder quartären Ammoniumcarboxylate;
D) gegebenenfalls Hilfs- und Zusatzstoffe;
wobei die beiden Komponenten A) und B) in dem Verhältnis vorliegen, dass auf jede Hydroxylgruppe der Komponente B) 0,3 bis 1 Uretdiongruppe der Komponente A) entfällt und der Anteil des Katalysators unter C) 0,001 bis 3 Gew.-% an der Gesamtmenge der Komponenten A) und B) beträgt.

2. Polyurethan-Pulverlackzusammensetzung nach Anspruch 1,
**dadurch gekennzeichnet,**
**dass** als Komponente A) epoxidgruppenterminierte, uretdiongruppenhaltige Polyadditionsverbindungen, erhalten durch Umsetzung von
a) 40 bis 84,5 Gew.-% mindestens einer Polyisocyanatkomponente, die aufgebaut ist aus
1. mindestens 40 Gew.-% einer Uretdiongruppen aufweisenden Polyisocyanatverbindung mit einer mittleren Funktionalität von mindestens 2,0
und
2. höchstens 60 Gew.-% mindestens einer Diisocyanatverbindung und/oder Isocyanuratverbindung ohne Uretdiongruppen;
b) 50 bis 15 Gew.-% mindestens einer Verbindung mit mindestens zwei Hydroxylgruppen;
c) 10 bis 0,5 Gew.-% mindestes einer Verbindung mit mindestens einer Epoxidgruppe und mindestens einer anderen gegenüber Isocyanatgruppen reaktiven funktionellen Gruppe;
wobei die Polyadditionsverbindungen unterhalb von 40 °C in fester und oberhalb von 130 °C in flüssiger Form vorliegen, zahlenmittlere Molmassen zwischen 1 000 bis 15 000 und einen Gehalt an freien Isocyanatgruppen (berechnet als NCO; Molekulargewicht = 42) von 0 bis 2 Gew.-% aufweisen,
eingesetzt werden.

3. Polyurethan-Pulverlackzusammensetzung nach mindestens einem der vorherigen Ansprüche,
**dadurch gekennzeichnet,**
**dass** Uretdiongruppen aufweisende Polyisocyanatverbindungen a1), hergestellt aus 1,6-Diisocyanatohexan (HDI), 2-Methylpentamethylendiisocyanat-1,5 (DI 51), 2,2,4 (2,4,4)-Trimethylhexamethylendiisocyanat, 4,4'-Diisocyanatodicyclohexylmethan, 1,3- und 1,4-Diisocyanatocyclohexan und Isophorondiisocyanat (IPDI) oder Gemischen solcher Diisocyanate, eingesetzt werden.

4. Polyurethan-Pulverlackzusammensetzung nach mindestens einem der vorherigen Ansprüche,
**dadurch gekennzeichnet,**
**dass** Diisocyanate und/oder Isocyanurate a2), ausgewählt aus 1,6-Diisocyanatohexan (HDI), 2-Methylpentamethylendiisocyanat-1,5 (DI 51), 2,2,4 (2,4,4)-Trimethylhexamethylendiisocyanat, 4,4'-Diisocyanatodicyclohexyl-methan, 1,3- und 1 ,4-Diisocyanatocyclohexan oder Isophorondiisocyanat (IPDI) oder Gemischen, eingesetzt werden.

5. Polyurethan-Pulverlackzusammensetzung nach mindestens einem der vorherigen Ansprüche,
**dadurch gekennzeichnet,**
**dass** als Verbindungen b) Diole, ausgewählt aus Ethylenglykol, Triethylenglykol, Butandiol-1,4, Pentandiol-1,5, Hexandiol-1,6, 3-Methyl-pentandiol-1,5, Neopentylglykol, 2,2,4 (2,4,4)-Trimethylhexandiol und Hydroxypivalinsäureneopentylglykolester, allein oder in Mischungen eingesetzt werden.

6. Polyurethan-Pulverlackzusammensetzung nach mindestens einem der vorherigen Ansprüche,
**dadurch gekennzeichnet,**
**dass** Verbindungen b), ausgewählt aus linearen hydroxylgruppenhaltigen Polyestern, Polycarbonaten, Polycaprolactonen, Polyethern, Polythioethern, Polyesteramiden, Polyurethanen oder Polyacetalen, allein oder in Mischungen eingesetzt werden.

7. Polyurethan-Pulverlackzusammensetzung nach mindestens einem der vorherigen Ansprüche,
**dadurch gekennzeichnet,**
**dass** 2,3-Epoxy-1-propanol und/oder epoxidiertes Sojaöl als Komponente c) eingesetzt werden.

8. Polyurethan-Pulverlackzusammensetzungen nach mindestens einem der vorherigen Ansprüche,
**dadurch gekennzeichnet,**
**dass** als hydroxylgruppenhaltige Polymere B) Polyester, Polyether, Polyacrylate, Polyurethane und Polycarbonate, allein oder in Mischungen, enthalten sind.

9. Polyurethan-Pulverlackzusammensetzung nach mindestens einem der vorherigen Ansprüche,
**dadurch gekennzeichnet,**
**dass** als Katalysator C) Zinkacetylacetonat, Lithiumisopropyalkoholat, Tetraalkylammoniumhydroxid, Tetraalkylammoniumfluorid und/oder Tetraalkylammoniumbenzoat enthalten ist.

10. Polyurethan-Pulverlackzusammensetzung nach mindestens einem der vorherigen Ansprüche,
**dadurch gekennzeichnet,**
**dass** als Hilfs- und Zusatzstoffe D) Verlaufsmittel, Lichtschutzmittel, Füllstoff, zusätzliche Katalysatoren und/oder Pigmente enthalten sind.

11. Verfahren zur Herstellung von Polyurethan-Pulverlackzusammensetzungen, im Wesentlichen enthaltend
A) mindestens eine epoxidgruppenterminierte, uretdiongruppenhaltige Polyadditionsverbindung mit einem Schmelzpunkt von 40 bis 130 °C, einer zahlenmittleren Molmasse zwischen 1 000 und 15 000 und einem Gehalt an freien Isocyanatgruppen (berechnet als NCO, Molekulargewicht = 42) von 0 bis 2 Gew.-%;
B) mindestens ein hydroxylgruppenhaltiges Polymer mit einem Schmelzpunkt von 40 bis 130 °C und einer OH-Zahl von 20 bis 200 mg KOH/g;
C) mindestens einen Katalysator aus der Gruppe der Metallacetylacetonate, Metallhydroxide, Metallalkoholate, quartären Ammoniumhydroxide, quartären Ammoniumfluoride oder quartären Ammoniumcarboxylate;
D) gegebenenfalls Hilfs- und Zusatzstoffe;
wobei die beiden Komponenten A) und B) in dem Verhältnis vorliegen, dass auf jede Hydroxylgruppe der Komponente B) 0,3 bis 1 Uretdiongruppe der Komponente A) entfällt und der Anteil des Katalysators unter C) 0,001 bis 3 Gew.-% an der Gesamtmenge der Komponente A) und B) beträgt, in beheizbaren Aggregaten bei einer Temperaturobergrenze von 120 bis 130 °C.

12. Verwendung von Zusammensetzungen aus
A) mindestens einer epoxidgruppenterminierten, uretdiongruppenhaltigen Polyadditionsverbindung mit einem Schmelzpunkt von 40 bis 130 °C, einer zahlenmittleren Molmasse zwischen 1 000 und 15 000 und einem Gehalt an freien Isocyanatgruppen (berechnet als NCO, Molekulargewicht = 42) von 0 bis 2 Gew.-%;
B) mindestens einem hydroxylgruppenhaltigen Polymer mit einem Schmelzpunkt von 40 bis 130 °C und einer OH-Zahl von 20 bis 200mg KOH/g;
C) mindestens einem Katalysator aus der Gruppe der Metallacetylacetonate, Metallhydroxide, Metallalkoholate, quartären Ammoniumhydroxide, quartären Ammoniumfluoride oder quartären Ammoniumcarboxylate;
D) gegebenenfalls Hilfs- und Zusatzstoffen;
wobei die beiden Komponenten A) und B) in dem Verhältnis vorliegen, dass auf jede Hydroxylgruppe der Komponente B) 0,3 bis 1 Uretdiongruppe der Komponente A) entfällt und der Anteil des Katalysators unter C) 0,001 bis 3 Gew.-% an der Gesamtmenge der Komponenten A) und B) beträgt, in Polyurethan-Pulverlackzusammensetzungen.

13. Verwendung nach Anspruch 12,
**dadurch gekennzeichnet,**
**dass** Ausgangsverbindungen nach mindestens einem der Ansprüche 1 bis 10 enthalten sind.

14. Verwendung nach mindestens einem der Ansprüche 12 bis 13 zur Herstellung von Pulverlackbeschichtungen auf Metall-, Kunststoff-, Holz-, Glas-, Leder- oder sonstigen hitzeresistenten Untergründen.

15. Metall-, Glas-, Holz-, Leder- oder Kunststoffbeschichtungszusammensetzungen, im Wesentlichen enthaltend eine Polyurethan-Pulverlackzusammensetzung aus
A) mindestens einer epoxidgruppenterminierten, uretdiongruppenhaltigen Polyadditionsverbindung mit einem Schmelzpunkt von 40 bis 130 °C, einer zahlenmittleren Molmasse zwischen 1 000 und 15 000 und einem Gehalt an freien Isocyanatgruppen (berechnet als NCO, Molekulargewicht = 42) von 0 bis 2 Gew.-%;
B) mindestens einem hydroxylgruppenhaltigen Polymer mit einem Schmelzpunkt von 40 bis 130 °C und einer OH-Zahl von 20 bis 200mg KOH/g;
C) mindestens einem Katalysator aus der Gruppe der Metallacetylacetonate, Metallhydroxide, Metallalkoholate, quartären Ammoniumhydroxide, quartären Ammoniumfluoride oder quartären Ammoniumcarboxylate;
D) gegebenenfalls Hilfs- und Zusatzstoffen;
wobei die beiden Komponenten A) und B) in dem Verhältnis vorliegen, dass auf jede Hydroxylgruppe der Komponente B) 0,3 bis 1 Uretdiongruppe der Komponente A) entfällt und der Anteil des Katalysators unter C) 0,001 bis 3 Gew.-% an der Gesamtmenge der Komponenten A) und B) beträgt.

16. Metallbeschichtung nach Anspruch 15 für Automobilkarossen, Motor- und Fahrräder, Gebäudeteile und Haushaltsgeräte.

17. Beschichtungszusammensetzung nach einem der Ansprüche 15 bis 16,
**dadurch gekennzeichnet,**
**dass** diese Verbindungen nach mindestens einem der Ansprüche 1 bis 10 enthalten.

## Claims

1. A polyurethane powder coating composition essentially comprising
A) at least one epoxy-terminated polyaddition compound containing uretdione groups which has a melting point of from 40 to 130°C, a number-average molar mass of between 1 000 and 15 000, and a free isocyanate group content (calculated as NCO, molecular weight = 42) of from 0 to 2% by weight;
B) at least one hydroxyl-containing polymer having a melting point of from 40 to 130°C and an OH number of from 20 to 200 mg KOH/g;
C) at least one catalyst selected from the group consisting of metal acetylacetonates, metal hydroxides, metal alkoxides, quaternary ammonium hydroxides, quaternary ammonium fluorides, and quaternary ammonium carboxylates;
D) if desired, auxiliaries and additives,
the ratio of the two components A) and B) being such that for each hydroxyl group of component B) there is from 0.3 to 1 uretdione group of component A), and the fraction of the catalyst under C) being from 0.001 to 3% by weight of the total amount of components A) and B).

2. A polyurethane powder coating composition according to claim 1,
**characterized in that** use is made
as component A) of epoxy-terminated polyaddition compounds containing uretdione groups and obtained by reacting
a) from 40 to 84.5% by weight of at least one polyisocyanate component composed of
1. at least 40% by weight of a polyisocyanate compound containing uretdione groups and having an average functionality of at least 2.0 and
2. not more than 60% by weight of at least one diisocyanate compound and/or isocyanurate compound without uretdione groups;
b) from 50 to 15% by weight of at least one compound having at least two hydroxyl groups;
c) from 10 to 0.5% by weight of at least one compound having at least one epoxide group and at least one other isocyanate-reactive functional group;
the polyaddition compounds being solid below 40°C and liquid above 130°C and having number-average molar masses of between 1 000 to 15 000 and a free isocyanate group content (calculated as NCO; molecular weight = 42) of from 0% to 2% by weight,

3. A polyurethane powder coating composition according to either or both of the preceding claims,
**characterized in that**
polyisocyanate compounds a1) containing uretdione groups are used which are prepared from 1,6-diisocyanatohexane (HDI), 2-methylpentamethylene 1,5-diisocyanate (DI 51), 2,2,4(2,4,4)-trimethylhexamethylene diisocyanate, 4,4'-diisocyanatodicyclohexylmethane, 1,3- and 1,4-diisocyanatocyclohexane, and isophorone diisocyanate (IPDI), or mixtures of such diisocyanates.

4. A polyurethane powder coating composition according to at least one of the preceding claims,
**characterized in that**
diisocyanates and/or isocyanurates a2) are used which are selected from 1,6-diisocyanatohexane (HDI), 2-methylpentamethylene 1,5-diisocyanate (DI 51), 2,2,4(2,4,4)-trimethylhexamethylene diisocyanate, 4,4'-diisocyanatodicyclohexylmethane, 1,3- and 1,4-diisocyanatocyclohexane, and isophorone diisocyanate (IPDI), or mixtures.

5. A polyurethane powder coating composition according to at least one of the preceding claims,
**characterized in that**
diols selected from ethylene glycol, triethylene glycol, butane-1,4-diol, pentane-1,5-diol, hexane-1,6-diol, 3-methylpentane-1,5-diol, neopentyl glycol, 2,2,4(2,4,4)-trimethylhexanediol, and neopentyl glycol hydroxypivalate, alone or in mixtures, are used as compounds b).

6. A polyurethane powder coating composition according to at least one of the preceding claims,
**characterized in that**
compounds b) selected from linear hydroxyl-containing polyesters, polycarbonates, polycaprolactones, polyethers, polythioethers, polyesteramides, polyurethanes, and polyacetals are used alone or in mixtures.

7. A polyurethane powder coating composition according to at least one of the preceding claims,
**characterized in that**
2,3-epoxy-1-propanol and/or epoxidized soybean oil are/is used as component c).

8. A polyurethane powder coating composition according to at least one of the preceding claims,
**characterized in that** it comprises
polyesters, polyethers, polyacrylates, polyurethanes, and polycarbonates, alone or in mixtures, as hydroxyl-containing polymers B).

9. A polyurethane powder coating composition according to at least one of the preceding claims,
**characterized in that** it comprises
zinc acetylacetonate, lithium isopropoxide, tetraalkylammonium hydroxide, tetraalkylammonium fluoride and/or tetraalkylammonium benzoate as catalyst C).

10. A polyurethane powder coating composition according to at least one of the preceding claims,
**characterized in that** it comprises
levelling agents, light stabilizers, filler, additional catalysts and/or pigments as auxiliaries and additives D).

11. A process for preparing a polyurethane powder coating composition essentially comprising
A) at least one epoxy-terminated polyaddition compound containing uretdione groups which has a melting point of from 40 to 130°C, a number-average molar mass of between 1 000 and 15 000, and a free isocyanate group content (calculated as NCO, molecular weight = 42) of from 0 to 2% by weight;
B) at least one hydroxyl-containing polymer having a melting point of from 40 to 130°C and an OH number of from 20 to 200 mg KOH/g;
C) at least one catalyst selected from the group consisting of metal acetylacetonates, metal hydroxides, metal alkoxides, quaternary ammonium hydroxides, quaternary ammonium fluorides, and quaternary ammonium carboxylates;
D) if desired, auxiliaries and additives,
the ratio of the two components A) and B) being such that for each hydroxyl group of component B) there is from 0.3 to 1 uretdione group of component A), and the fraction of the catalyst under C) being from 0.001 to 3% by weight of the total amount of components A) and B), in heatable apparatus, with an upper temperature limit of 120 to 130°C.

12. The use of a composition comprising
A) at least one epoxy-terminated polyaddition compound containing uretdione groups which has a melting point of from 40 to 130°C, a number-average molar mass of between 1 000 and 15 000, and a free isocyanate group content (calculated as NCO, molecular weight = 42) of from 0 to 2% by weight;
B) at least one hydroxyl-containing polymer having a melting point of from 40 to 130°C and an OH number of from 20 to 200 mg KOH/g;
C) at least one catalyst selected from the group consisting of metal acetylacetonates, metal hydroxides, metal alkoxides, quaternary ammonium hydroxides, quaternary ammonium fluorides, and quaternary ammonium carboxylates;
D) if desired, auxiliaries and additives,
the ratio of the two components A) and B) being such that for each hydroxyl group of component B) there is from 0.3 to 1 uretdione group of component A), and the fraction of the catalyst under C) being from 0.001 to 3% by weight of the total amount of components A) and B), in a polyurethane powder coating composition.

13. The use according to claim 12,
**characterized in that** starting compounds according to at least one of claims 1 to 10 are present.

14. The use according to either or both of claims 12 and 13 for producing powder coatings on metal, plastic, wood, glass, leather or other heat-resistant substrates.

15. A coating composition for metal, glass, wood, leather or plastics which essentially comprises a polyurethane powder coating composition comprising
A) at least one epoxy-terminated polyaddition compound containing uretdione groups which has a melting point of from 40 to 130°C, a number-average molar mass of between 1 000 and 15 000, and a free isocyanate group content (calculated as NCO, molecular weight = 42) of from 0 to 2% by weight;
B) at least one hydroxyl-containing polymer having a melting point of from 40 to 130°C and an OH number of from 20 to 200 mg KOH/g;
C) at least one catalyst selected from the group consisting of metal acetylacetonates, metal hydroxides, metal alkoxides, quaternary ammonium hydroxides, quaternary ammonium fluorides, and quaternary ammonium carboxylates;
D) if desired, auxiliaries and additives, the ratio of the two components A) and B) being such that for each hydroxyl group of component B) there is from 0.3 to 1 uretdione group of component A), and the fraction of the catalyst under C) being from 0.001 to 3% by weight of the total amount of components A) and B).

16. A metal coating according to claim 15 for automobile bodies, cycles and motorcycles, architectural components, and household appliances.

17. A coating composition according to either of claims 15 and 16,
**characterized in that** it comprises
compounds according to at least one of claims 1 to 10.

## Revendications

1. Composition de peinture en poudre de polyuréthanne contenant pour l'essentiel :
A) au moins un composé de polyaddition à terminaison de groupes époxydiques, contenant des groupes uréthdione, ayant un point de fusion de 40 à 130 °C, une masse molaire moyenne numérique comprise entre 1 000 et 15 000, et une teneur en groupes isocyanate libres (calculés comme NCO, poids moléculaire = 42) de 0 à 2 % en poids ;
B) au moins un polymère contenant des groupes hydroxyle ayant un point de fusion de 40 à 130 °C et un indice OH de 20 à 200 mg KOH/g ;
C) au moins un catalyseur faisant partie du groupe des acétylacétonates de métal, des hydroxydes de métal, des alcoolates de métal, des hydroxydes d'ammonium quaternaires, des fluorures d'ammonium quaternaires ou des carboxylates d'ammonium quaternaires ;
D) le cas échéant des adjuvants et des additifs ;
les deux composants A) et B) étant présents dans un rapport selon lequel sur chaque groupe hydroxyle du composant B), s'échappe 0,3 à 1 groupe uréthdione du composant A), et la proportion du catalyseur sous C) est de 0,001 à 3 % en poids de la quantité totale des composants A) et B).

2. Composition de peinture en poudre de polyuréthanne selon la revendication 1,
**caractérisée en ce que**
comme composant A) on utilise des composés de polyaddition à terminaison de groupes époxydiques contenant des groupes uréthdione, qu'on obtient par mise à réagir de
a) 40 à 84,5 % en poids d'au moins un composant de polyisocyanate, composé de
- 1. au moins 40 % en poids d'un composé de polyisocyanate présentant des groupes uréthdione avec une fonctionnalité moyenne d'au moins 2,0, et
- 2. au maximum 60 % en poids d'au moins un composé de diisocyanate et/ou un composé d'isocyanurate sans groupes uréthdione ;
b) 50 à 15% en poids d'au moins un composé avec au moins deux groupes hydroxyle ;
c) 10 à 0,5 % en poids d'au moins un composé avec au moins un groupe époxydique et au moins un autre groupe fonctionnel réactif vis-à-vis des groupes isocyanate,
dans laquelle les composés de polyaddition se trouvent, à une température inférieure à 40 °C, sous forme solide et, à une température supérieure à 130 °C, sous forme liquide, et présentent des masses molaires moyennes situées entre 1 000 et 15 000 et une teneur en groupes isocyanate libres (calculée comme NCO ; poids moléculaire = 42) de 0 à 2 % en poids.

3. Composition de peinture en poudre de polyuréthanne selon au moins l'une des revendications précédentes,
**caractérisée en ce qu'**
on utilise des composés a1) de polyisocyanate présentant des groupes uréthdione, préparés à partir de 1,6-diisocyanatohexane (HDI), de 2-méthylpentaméthylène diisocyanate-1,5 (DI 51), de 2,2,4 (2,4,4)-triméthylhexaméthylènediisocyanate, de 4,4'-diisocyanatodicyclohexyl-méthane, de 1,3- et 1,4-diisocyanatocyclohexane et d'isophoronediisocyanate (IPDI) ou des mélanges de tels diisocyanates.

4. Composition de peinture en poudre de polyuréthanne selon au moins l'une des revendications précédentes,
**caractérisée en ce qu'**
on utilise des diisocyanates et/ou des isocyanurates a2), choisis parmi les 1,6-diisocyanatohexane (HDI), 2-méthylpentataméthylène diisocyanate-1,5 (DI 51), 2,2,4 (2,4,4)-triméthylhexaméthylènediisocyanate, 4,4'-diisocyanatodicyclohexylméthane, 1,3- et 1,4-diisocyanatocyclohexane ou l'isophoronediisocyanate (IPDI) ou des mélanges.

5. Composition de peinture en poudre de polyuréthanne selon au moins l'une des revendications précédentes,
**caractérisée en ce que**
comme composés b) on utilise des diols choisis parmi les éthylèneglycol, triéthylèneglycol, butanediol-1,4, pentanediol-1,5, hexanediol-1,6, 3-méthyl-pentanediol-1,5, néopentylglycol, 2,2,4 (2,4,4)-triméthylhexandiol et acide hydroxypivalique-néopentylglycolester, seuls ou en mélanges.

6. Composition de peinture en poudre de polyuréthanne selon au moins l'une des revendications précédentes,
**caractérisée en ce qu'**
on utilise des composés b) choisis parmi les polyesters contenant des groupes hydroxyle linéaires, les polycarbonates, les polycaprolactones, les polyéthers, les polythioéthers, les polyesteramides, les polyuréthannes ou les polyacétals, seuls ou en mélanges.

7. Composition de peinture en poudre de polyuréthanne selon au moins l'une des revendications précédentes,
**caractérisée en ce qu'**
on utilise du 2,3-époxy-1-propanol et/ou de l'huile de soja époxydée comme composant c).

8. Compositions de peinture en poudre de polyuréthanne selon au moins l'une des revendications précédentes,
**caractérisées en ce que**
comme polymères B) contenant des groupes hydroxyle, elles contiennent des polyesters, des polyéthers, des polyacrylates, des polyuréthannes et des polycarbonates, seuls ou en mélanges.

9. Composition de peinture en poudre de polyuréthanne selon au moins l'une des revendications précédentes,
**caractérisée en ce que**
comme catalyseur C) elle contient de l'acétylacétonate de zinc, de l'isopropylalcoolate de lithium, de l'hydroxyde de tétraalkylammonium, du fluorure de tétraalkylammonium et/ou du benzoate de tétraalkylammonium.

10. Composition de peinture en poudre de polyuréthanne selon au moins l'une des revendications précédentes,
**caractérisée en ce que**
comme adjuvants et additifs D) elle contient des agents d'écoulement, des agents de protection contre la lumière, une charge, d'autres catalyseurs et/ou des pigments.

11. Procédé de préparation de compositions de peinture en poudre de polyuréthanne, contenant pour l'essentiel
A) au moins un composé de polyaddition à terminaison de groupes époxydiques, contenant des groupes uréthdione, ayant un point de fusion de 40 à 130 °C, une masse molaire moyenne numérique entre 1 000 et 15 000, et une teneur en groupes isocyanate libres (calculés comme NCO, poids moléculaire = 42) de 0 à 2 % en poids ;
B) au moins un polymère contenant des groupes hydroxyle ayant un point de fusion de 40 à 130 °C et un indice OH de 20 à 200 mg KOH/g ;
C) au moins un catalyseur faisant partie du groupe des acétylacétonates de métal, des hydroxydes de métal, des alcoolates de métal, des hydroxydes d'ammonium quaternaires, des fluorures d'ammonium quaternaires ou des carboxylates d'ammonium quaternaires ;
D) le cas échéant des adjuvants et des additifs ;
les deux composants A) et B) étant présents dans le rapport selon lequel sur chaque groupe hydroxyle du composant B), s'échappe 0,3 à 1 groupe uréthdione du composant A), et la proportion du catalyseur sous C) s'élève de 0,001 à 3 % en poids de la quantité totale des composants A) et B), dans des appareils pouvant être chauffés à une limite supérieure de températures de 120 à 130 °C.

12. Utilisation des compositions constituées de :
A) au moins un composé de polyaddition à terminaison de groupes époxydiques, contenant des groupes uréthdione, ayant un point de fusion de 40 à 130 °C, une masse molaire moyenne numérique comprise entre 1 000 et 15 000, et une teneur en groupes isocyanate libres (calculés comme NCO, poids moléculaire = 42) de 0 à 2 % en poids ;
B) au moins un polymère contenant des groupes hydroxyle ayant un point de fusion de 40 à 130 °C et un indice OH de 20 à 200 mg KOH/g ;
C) au moins un catalyseur faisant partie du groupe des acétylacétonates de métal, des hydroxydes de métal, des alcoolates de métal, des hydroxydes d'ammonium quaternaires, des fluorures d'ammonium quaternaires ou des carboxylates d'ammonium quaternaires ;
D) le cas échéant des adjuvants et des additifs ;
les deux composants A) et B) étant présents dans le rapport selon lequel sur chaque groupe hydroxyle du composant B), s'échappe 0,3 à 1 groupe uréthdione du composant A), et la proportion du catalyseur sous C) s'élève de 0,001 à 3 % en poids de la quantité totale des composants A) et B), dans des compositions de peinture en poudre de polyuréthanne.

13. Utilisation selon la revendication 12,
**caractérisée en ce qu'**
on utilise des composés de départ selon au moins l'une des revendications 1 à 10.

14. Utilisation selon au moins l'une des revendications 12 à 13, pour la préparation de revêtements de peinture en poudre sur des subjectiles de métal, de matière synthétique, de bois, de verre, de cuir ou d'autres résistant à la chaleur.

15. Compositions de revêtement sur métal, verre, bois, cuir ou matière synthétique, contenant pour l'essentiel une composition de peinture en poudre de polyuréthanne constituée de :
A) au moins un composé de polyaddition à terminaison de groupes époxydiques, contenant des groupes uréthdione, ayant un point de fusion de 40 à 130 °C, une masse molaire moyenne numérique comprise entre 1 000 et 15 000, et une teneur en groupes isocyanate libres (calculés comme NCO, poids moléculaire = 42) de 0 à 2 % en poids ;
B) au moins un polymère contenant des groupes hydroxyle ayant un point de fusion de 40 à 130 °C et un indice OH de 20 à 200 mg KOH/g ;
C) au moins un catalyseur faisant partie du groupe des acétylacétonates de métal, des hydroxydes de métal, des alcoolates de métal, des hydroxydes d'ammonium quaternaires, des fluorures d'ammonium quaternaires ou des carboxylates d'ammonium quaternaires ;
D) le cas échéant des adjuvants et des additifs ;
les deux composants A) et B) étant présents dans un rapport selon lequel vient sur chaque groupe hydroxyle du composant B), 0,3 à 1 groupe uréthdione du composant A), et la proportion du catalyseur sous C) s'élève de 0,001 à 3 % en poids de la quantité totale des composants A) et B).

16. Revêtement métallique selon la revendication 15, pour des carrosseries d'automobiles, des vélomoteurs et des bicyclettes, des pièces de construction et des appareils ménagers.

17. Composition de revêtement selon l'une des revendications 15 à 16,
**caractérisée en ce qu'**
elle contient des composés selon au moins l'une des revendications 1 à 10.
